(19) **Europäisches Patentamt / European Patent Office / Office européen des brevets**

(11) **EP 4 621 021 A1**

(12) **EUROPEAN PATENT APPLICATION**
published in accordance with Art. 153(4) EPC

(43) Date of publication:
24.09.2025 Bulletin 2025/39

(21) Application number: 23892080.5

(22) Date of filing: 17.11.2023

(51) International Patent Classification (IPC):
$C09D\ 175/06^{(2006.01)}$    $C09D\ 7/61^{(2018.01)}$
$C09D\ 7/63^{(2018.01)}$    $C09D\ 7/65^{(2018.01)}$
$C09D\ 7/20^{(2018.01)}$    $C08L\ 63/00^{(2006.01)}$
$C08L\ 91/00^{(2006.01)}$    $C08L\ 75/06^{(2006.01)}$
$C08K\ 5/5415^{(2006.01)}$    $C08K\ 3/24^{(2006.01)}$

(52) Cooperative Patent Classification (CPC):
C08K 3/24; C08K 5/5415; C08L 63/00; C08L 75/06;
C08L 91/00; C09D 7/20; C09D 7/61; C09D 7/63;
C09D 7/65; C09D 175/06; C23C 2/26

(86) International application number:
PCT/KR2023/018586

(87) International publication number:
WO 2024/107018 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.11.2022 KR 20220155163

(71) Applicant: POSCO Co., Ltd
Pohang-si, Gyeongsangbuk-do 37859 (KR)

(72) Inventors:
• CHO, Soo-Hyoun
  Gwangyang-si, Jeollanam-do 57807 (KR)
• KIM, Jong-Kook
  Gwangyang-si, Jeollanam-do 57807 (KR)

(74) Representative: Meissner Bolte Partnerschaft
mbB
Patentanwälte Rechtsanwälte
Postfach 86 06 24
81633 München (DE)

(54) **SURFACE TREATMENT COMPOSITION FOR ZINC ALLOY PLATED STEEL SHEET, ZINC ALLOY PLATED STEEL SHEET SURFACE-TREATED USING SAME AND METHOD FOR MANUFACTURING SAME**

(57) The present invention relates to a surface treatment composition, a zinc alloy plated steel sheet surface-treated using same and a method for manufacturing same, the composition being capable of providing excellent corrosion resistance, fingerprint resistance, and contamination/discoloration resistance properties to a zinc alloy plated steel sheet used as a construction material or the like.

**Description**

Technical Field

The present disclosure relates to a surface treatment composition for a zinc alloy plated steel sheet, a zinc alloy plated steel sheet surface-treated using the same and a method for manufacturing the same.

Background Art

In general, compared to pure zinc-plated steel sheets, steel sheets having excellent corrosion resistance to red rust and having a zinc alloy plating layer (a representative example is a hot-dip zinc alloy plated steel sheet containing magnesium (Mg) and aluminum (Al)) have most of their exposed surfaces comprised of zinc (Zn) or zinc alloy (Zn alloy), so that white rust occurs on a surface thereof when the steel sheets are exposed to general living environments or, especially, humid atmospheres. In addition, since magnesium and aluminum contained in a plating layer have a higher affinity for oxygen than zinc, blackening is likely to occur when there is insufficient oxygen binding to zinc.

In addition, as compared to pure zinc-plated steel sheets, when fingerprint-resistance is not secured due to surface contamination by fingerprint stains and contaminants, the contaminants may cause surface appearance defects due to incomplete oxidation by penetrating through the plating layer, resulting in black stain discoloration. Such surface stain discoloration defects tend to occur more frequently, especially when used in high-temperature and humid environments.

Conventionally, as part of the rust-inhibiting treatment, a metal surface was pretreated with 5 to 100 mg/m$^2$ of chromate, and then an organic coating was formed. However, due to the heavy metals such as chromium (Cr) included in the pretreatment agent, not only were additional pretreatment facilities and processes required, but also the safety of workers was a problem due to heavy metal wastewater. In addition, since the hexavalent chromium-containing solution generated from the washing water and wastewater had to be treated according to a special treatment process, there was a problem of increased manufacturing costs, and the chromate-treated plated steel sheet also had a problem of chromium ions being eluted during use or disposal, resulting in serious environmental pollution.

In order to solve these problems and secure corrosion resistance, conventional technologies have developed surface treatment agents such as corrosion-resistant metal coating agents that do not contain chromium. For example, Patent Documents 1 and 2 disclose techniques for forming a coating material by containing aluminum biphosphate or combining tannic acid with aromatic carboxylic acids such as sodium acetate, sodium borate, and imidazole, and surfactants, and the like, but they have a problem of poor corrosion resistance. Patent Document 3 discloses a surface treatment agent comprised of zirconium carbonate, vanadyl ion, and zirconium compounds, and the like, but while this has good corrosion resistance, it has a problem of being vulnerable to blackening resistance

On the other hand, Patent Document 4 discloses a surface treatment agent comprised of titanium-based, zirconium-based, phosphate-based, and molybdenum-based compounds, and the like, but there is a problem that it does not suppress a blackening phenomenon in a zinc alloy plated steel sheet using magnesium (Mg), aluminum (Al), and the like. Patent Document 5 discloses a surface treatment agent comprised of ammonium molybdate, a water-dispersed urethane resin, isopropylamine, ammonium zirconium carbonate, an epoxy-based silane coupling agent, and silica sol, but has a problem in that it cannot provide sufficient corrosion resistance.

Recently, in order to use zinc alloy plated steel sheets as building materials, and the like, surface properties thereof should be aesthetically pleasing, and the zinc alloy plated steel sheets should exhibit excellent corrosion resistance in a corrosive environment, and it is important for the zinc alloy plated steel sheet to secure fingerprint-resistance properties or discoloration resistance properties without being discolored when contacting fingerprints or contaminants during a handling process for use by customers.

(Patent Document 1) Japanese Patent Publication No. sho53-28857
(Patent Document 2) Japanese Patent Publication No. sho51-71233
(Patent Document 3) Japanese Patent Publication No. 2002-332574
(Patent Document 4) Japanese Registered Patent Publication No. Hei7-096699
(Patent Document 5) Japanese Patent Publication No. 2005-146340

Summary of Invention

Technical Problem

An aspect of the present disclosure is to provide a surface treatment composition that may impart excellent corrosion resistance, fingerprint-resistance properties, and anti-contamination discoloration properties to a zinc alloy plated steel sheet used as a building material, and the like.

Specifically, the present disclosure is to provide a surface treatment composition that may impart excellent corrosion resistance and fingerprint-resistance discoloration properties to a zinc alloy plated steel sheet under high temperature and high humidity environments.

Additionally, the present disclosure is to provide a surface treatment composition that does not include any heavy metal components such as chromium, which are environmental pollutants, and thus is harmless to the human body and does not cause problems due to environmental pollution.

Additionally, the present disclosure is to provide a zinc alloy plated steel sheet having excellent corrosion resistance, fingerprint-resistance properties, and anti-contamination discoloration properties, and a method for manufacturing the same.

The aspect of the present disclosure is not limited to the matters described above. Additional aspects of the present disclosure are described in an overall content of the specification, and those skilled in the art to which the present disclosure pertains will have no difficulty in understanding the additional aspect of the present disclosure from the contents described in the specification of the present disclosure.

Solution to Problem

An embodiment of the present disclosure relates to a surface treatment composition including a solid and a solvent,

wherein the surface treatment composition comprises, by 100 wt% of the solid,
70 to 90 wt% of a resin mixture comprising a high molecular weight polysilicon-modified polyurethane main resin, a low molecular weight polysilicon-modified polyurethane auxiliary resin, and an epoxy auxiliary resin;
5 to 25 wt% of a melamine-based curing agent;
0.5 to 10 wt% of an oxidation-discoloration inhibitor;
0.5 to 10 wt% of a silane compound;
0.5 to 10 wt% of a rust-inhibiting and corrosion-resistant agent; and
0.5 to 5 wt% of a fingerprint-resistance improving agent.

The high molecular weight polysilicon-modified polyurethane main resin (A), the low molecular weight polysilicon-modified polyurethane auxiliary resin (B), and the epoxy auxiliary resin (C) may be mixed in a weight ratio of 1:4.5:4.5 to 9:0.5:0.5.

The high molecular weight polysilicon-modified polyurethane main resin (A) may have a glass transition temperature (Tg) of -20°C to -10°C and a weight average molecular weight (Mw) of 100,000 to 200,000.

The low molecular weight polysilicon modified polyurethane auxiliary resin (B) may have a glass transition temperature (Tg) of -30°C to -20°C and a weight average molecular weight (Mw) of 30,000 to 70,000.

The epoxy auxiliary resin (C) may have an epoxide equivalent ratio of 450 to 550 g/eq and a weight average molecular weight (Mw) of 450 to 4,000.

The melamine-based curing agent may comprise at least one functional group selected from the group consisting of methoxy methyl, hydroxymethyl and imino functional groups, and the functional group is a cross-linked skeletal polymer resin containing a carboxyl group.

The oxidation-discoloration inhibitor may be at least one selected from the group consisting of ammonium molybdate and sodium molybdate.

The silane compound may include at least one selected from the group consisting of vinylmethoxy silane, vinyltrimethoxy silane, vinylepoxy silane, vinyltriepoxy silane, methyltrimethoxysilane, tetraethylorthosilicate, tetramethylorthosilicate, 3-aminopropyltriepoxy silane, 3-glycidoxypropyltrimethoxy silane, 3-glycidoxypropyltriethoxy silane, 3-mercaptopropyltrimethoxy silane, N-(1,3 dimethylbutylidene)-3-(triepoxy silane)-1-propanamine, N,N-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-glycidoxypropylmethyldiethoxysilane, γ-mercaptopropyltriethoxysilane, and N-[2-(vinylbenzylamino)ethyl]-3-aminopropyltrimethoxysilane.

The silane compound may be hydrolyzed by at least one acid selected from the group consisting of formic acid, acetic acid, phosphoric acid, hydrochloric acid, and nitric acid.

The rust-inhibiting and corrosion-resistant agent may be at least one selected from the group consisting of a phosphoric acid-based rust inhibitor, a fluorine-based rust inhibitor, a vanadium-based rust inhibitor, a cerium salt-based rust inhibitor, and a selenium salt-based rust inhibitor.

The fingerprint-resistance improving agent may be at least one selected from the group consisting of paraffin wax, olefin wax, carnauba wax, polyester wax, polypropylene wax, polyethylene-Teflon wax, and polyTeflon wax.

A solid content may be 20 to 40 wt% based on a total weight of the surface treatment composition, and a balance may be a solvent.

The solvent may comprise 20 to 40 wt% of N-ethyl-2-pyrrolidone (NEP) based on the total weight of the solvent and a balance is water.

Another embodiment of the present disclosure relates to a surface-treated hot-dip zinc alloy plated steel sheet comprising: a steel sheet;

a zinc alloy plating layer formed on at least one surface of the steel sheet; and
a surface-treated coating layer formed on the zinc alloy plating layer,
wherein the surface-treated coating layer is formed from the surface treatment composition.

The ternary hot-dip zinc alloy plating layer may comprise an Al-enriched layer formed on an interface, and an occupancy area ratio of the Al-enriched layer is 70% to 100%.

The ternary hot-dip zinc alloy plating layer may comprise 0.2 to 15 wt% of Al, 0.5 to 3.5 wt% of Mg, and a balance of Zn and inevitable impurities.

The surface-treated coating layer may have a thickness of 1 $\mu$m to 10 $\mu$m.

Yet another embodiment of the present disclosure relates to a method for manufacturing a surface-treated ternary hot-dip zinc alloy plated steel sheet, comprising:

coating the surface treatment composition on a ternary hot-dip zinc alloy plated steel sheet having a ternary hot-dip zinc alloy plating layer formed thereon;
forming a surface-treated coating layer by drying the surface treatment composition.

The surface treatment composition may be coated at a thickness of 2.5 $\mu$m to 50 $\mu$m.

In the forming a surface-treated coating layer, the surface treatment composition may be dried by increasing a temperature to 70 to 250°C.

Advantageous Effects of Invention

A surface treatment composition according to the present disclosure may be coated on a zinc alloy plated steel sheet to form a surface treatment coating layer, thereby providing a zinc alloy plated steel sheet having excellent corrosion resistance, fingerprint-resistance properties, and anti-contamination discoloration properties.

In addition, since a surface treatment composition according to the present disclosure does not include any heavy metal components such as chromium, which are environmental pollutants, this is harmless to the human body and does not cause problems due to environmental pollution.

The various and beneficial advantages and effects of the present disclosure are not limited to the above-described contents, and will be more easily understood in the process of explaining specific embodiments of the present disclosure.

Best Mode for Invention

The terms used in the present specification are intended to describe specific embodiments and are not intended to limit the present disclosure. In addition, singular forms used in the present specification include plural forms unless the relevant definition indicates the opposite meaning.

The meaning of "include" and "comprise" used in the specification specifies the configuration and does not exclude the existence or addition of other configurations.

Unless otherwise defined, all terms including technical and scientific terms used herein have the same meaning as would be commonly understood by one of ordinary skill in the art to which example embodiments of the present disclosure belong. It will be further understood that the terms, such as those defined in commonly used dictionaries, should be interpreted as having meanings consistent with the relevant technical literature and the currently disclosed content.

The present disclosure relates to a surface treatment composition for a zinc alloy plated steel sheet having excellent solution stability, having excellent flat corrosion resistance, excellent processed portion corrosion resistance, excellent fingerprint-resistance properties when applied to a ternary hot-dip zinc alloy plated steel sheet as a preferred example of a zinc alloy plated steel sheet, and having excellent anti-contamination discoloration properties. In addition, the present disclosure relates to a zinc alloy plated steel sheet surface-treated using the surface treatment composition and a method for manufacturing the same.

First, a surface treatment composition, an embodiment of the present disclosure, will be described in detail.

The surface treatment composition is a surface treatment composition including a solid content and a solvent, and the surface treatment composition may comprise, by 100 wt% of the solid content, 70 to 90 wt% of a resin mixture comprising a high molecular weight polysilicon-modified polyurethane main resin, a low molecular weight polysilicon-modified polyurethane auxiliary resin, and an epoxy auxiliary resin; 5 to 25 wt% of a melamine-based curing agent; 0.5 to 10 wt% of an oxidation-discoloration inhibitor; 0.5 to 10 wt% of a silane compound; 0.5 to 10 wt% of a rust-inhibiting and corrosion-resistant agent; and 0.5 to 5 wt% of a fingerprint-resistance improving agent.

Hereinafter, the composition of each composition will be described in detail.

Resin Mixture

A high molecular weight polysilicon-modified polyurethane main resin is a component that may provide excellent corrosion resistance, water resistance, and solvent resistance to a zinc alloy plated steel sheet. The high molecular weight polysilicon-modified polyurethane main resin is not limited thereto, but may be synthesized from a silicone polymer and a polycarbonate polyol, and has self-crosslinking characteristics due to the use of a three-dimensional (Trimer) isocyanate polymer during synthesis.

A weight average molecular weight (Mw) of a high molecular weight polysilicon-modified polyurethane main resin may be 100,000 to 200,000. When the weight average molecular weight is less than 100,000, it may be difficult to secure sufficient corrosion resistance, but when the weight average molecular weight exceeds 200,000, the solution stability may be reduced and the hardness of the coating may increase, which may cause problems such as reduced processability.

A glass transition temperature (Tg) of the high molecular weight polysilicon-modified polyurethane main resin may be -20°C to -10°C. When the glass transition temperature is less than -20°C, it may be difficult to secure sufficient corrosion resistance, but when the glass transition temperature exceeds -10°C, the solution stability may be reduced and the hardness of the coating may increase, which may cause problems such as reduced processability.

A low molecular weight polysilicon modified polyurethane auxiliary resin is a component that may impart soft characteristics to a zinc alloy plated steel sheet and improve processability and adhesion. The low molecular weight polysilicon modified polyurethane auxiliary resin is not limited thereto, but may be synthesized from silicone polymer and polycarbonate polyol. Unlike the high molecular weight polysilicon modified polyurethane main resin, the low molecular weight polysilicon modified polyurethane auxiliary resin does not have self-crosslinking characteristics.

The weight average molecular weight of the low molecular weight polysilicon modified polyurethane auxiliary resin may be 30,000 to 70,000. When the weight average molecular weight is less than 30,000, it may be difficult to secure sufficient corrosion resistance due to a decrease in the density of a coating, but when the weight average molecular weight exceeds 70,000, an effect of imparting soft properties to the coating may be insufficient, which may cause problems such as a decrease in processability and adhesion.

The glass transition temperature (Tg) of the low molecular weight polysilicon modified polyurethane auxiliary resin may be -30°C to -20°C. When the glass transition temperature is less than -30°C, it may be difficult to secure sufficient corrosion resistance due to the decrease in the density of the coating, but when the glass transition temperature exceeds -20°C, an effect of imparting soft properties to the coating may be insufficient, which may cause problems such as reduced processability and adhesion.

An epoxy auxiliary resin is a component for forming a dense coating on a zinc alloy plated steel sheet and improving flat sheet corrosion resistance.

An epoxide equivalent ratio of the epoxy auxiliary resin may be 450 to 550 g/eq. When the epoxide equivalent ratio is less than 450 g/eq, an effect of improving the density of the coating and the flat sheet corrosion resistance is not sufficient, but when the epoxide equivalent ratio exceeds 550 g/eq, the coating may be excessively hard, which may cause problems such as reduced processability.

The weight average molecular weight (Mw) of the epoxy auxiliary resin may be 450 to 4,000. When the weight average molecular weight (Mw) is less than 450, an effect of improving the density and flat sheet corrosion resistance of the coating may not be sufficient, but when the weight average molecular weight (Mw) exceeds 4,000, the hardness of the coating may be excessive, resulting in a problem of reduced processability.

The resin mixture may be a mixture of a high molecular weight polysilicon-modified polyurethane main resin (A): a low molecular weight polysilicon-modified polyurethane auxiliary resin (B): an epoxy auxiliary resin (C) in a weight ratio of 1:4.5:4.5 to 9:0.5:0.5, preferably 1:0.5:0.5 to 9:0.5:0.5, more preferably 2:0.5:0.5 to 9:0.5:0.5. For example, the resin mixture may be used as a mixture of A:B:C in a weight ratio of 2:0.5:0.5, and more preferably, the resin mixture may be used as a mixture of A:B:C in a weight ratio of 1:0.5:0.5.

When a content of the high molecular weight polysilicon-modified polyurethane main resin in the resin mixture is significantly low, the flat sheet corrosion resistance, processed portion corrosion resistance, and alkali resistance of the steel sheet may deteriorate. On the other hand, when the content of the high molecular weight polysilicon-modified polyurethane main resin in the resin mixture is significantly high, the processed portion corrosion resistance and blackening resistance of the steel sheet may deteriorate.

A content of the resin mixture may be 70 to 90 wt% with respect to 100 wt% of the solid content of the surface treatment composition. The content of the resin mixture may be preferably 70.0 to 90.0 wt%. When the content of the resin mixture is less than 70 wt%, it may be difficult to secure sufficient corrosion resistance and alkali resistance, and when the content of the resin mixture exceeds 90 wt%, since the content of additives for improving the physical properties in the surface treatment composition is relatively low, corrosion resistance may be reduced and solution stability may be reduced.

Melamine-based Curing Agent

The melamine-based curing agent is included to form a dense crosslinking bond by reacting with a main resin and an auxiliary resin of the surface treatment solution composition for a zinc alloy plated steel sheet to form a solid coating layer. The melamine-based curing agent may include at least one functional group among methoxy methyl, hydroxymethyl, and an imino functional group, and the functional group has one feature of crosslinking a skeletal polymer resin including a carboxyl group, and may be comprised of at least one selected from the group consisting of, for example, methoxymethylmelamine, butoxymethylmelamine, ethoxymethylmelamine, and combinations thereof.

The melamine-based curing agent may be preferably included in an amount of 5 to 25 wt% with respect to 100 wt% of the solid content of the surface treatment composition. When the amount is less than 5 wt%, sufficient crosslinking may not be formed, and thus improvement in physical properties may not be expected. When the content exceeds 25 wt%, the stability of the solution deteriorates due to excessive crosslinking, and a phenomenon of solidification may occur over time. The melamine-based curing agent may be more preferably included in an amount of 5.0 to 25.0 wt% with respect to 100 wt% of the solid content of the surface treatment composition.

Oxidation-Discoloration inhibitor

The oxidation-discoloration inhibitor is a component included to prevent discoloration of the zinc alloy plated steel sheet when coming into contact with contaminants in a high-temperature and high-humidity environment. The oxidation-discoloration inhibitor may be at least one compound selected from the group consisting of ammonium molybdate and sodium molybdate.

A content of the oxidation discoloration inhibitor may be 0.5 to 10 wt% with respect to 100 wt% of the solid content of the surface treatment composition. When the content of the oxidation discoloration inhibitor is less than 0.5 wt%, sufficient oxidation discoloration resistance may not be expected, and when the content of the oxidation discoloration inhibitor exceeds 10 wt%, an effect of improving the oxidation discoloration resistance is minimal, but the problem of reduced corrosion resistance may occur. The oxidation discoloration inhibitor may be preferably 0.50 to 10.0 wt% with respect to 100 wt% of the solid content of the surface treatment composition.

Silane Compound

The silane compound is included to form a strong bond between a water-soluble organic resin and an inorganic additive of the surface treatment composition, and to modify the water-soluble organic resin to perform a coupling reaction.

The silane compound may be preferable included in an amount of 0.5 to 10 wt% with respect to 100 wt% of the solid content of the surface treatment composition. When the content of the silane compound is less than 0.5 wt%, it may be difficult to secure corrosion resistance because the content required for coupling bonding between the organic resin and the inorganic additive is insufficient, and when the content of the silane compound exceeds 10 wt%, there may be a problem that corrosion resistance is reduced after processing due to the presence of unreacted silane compounds after reaction with the organic resin. The silane compound may be more preferably included in an amount of 0.50 to 10.0 wt% with respect to 100 wt% of the solid content of the surface treatment composition.

The silane hydrolysis compounds may include at least one solvent selected from the group consisting of vinylmethoxy silane, vinyltrimethoxy silane, vinylepoxy silane, vinyltriepoxy silane, methyltrimethoxysilane, tetraethylorthosilicate, tetramethylorthosilicate, 3-aminopropyltriepoxy silane, 3-glycidoxypropyltrimethoxy silane, 3-glycidoxypropyltriethoxy silane, 3-mercaptopropyltrimethoxy silane, N-(1,3 dimethylbutylidene)-3-(triepoxy silane)-1-propanamine, N,N-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-glycidoxypropylmethyldiethoxy silane, γ-Mercaptopropyltriethoxysilane, N-[2-(vinylbenzylamino)ethyl]-3-aminopropyltrimethoxysilane, and may be hydrolyzed by at least one solvent selected from the group consisting of formic acid, acetic acid, phosphoric acid, hydrochloric acid, and nitric acid.

Rust-Inhibiting and Corrosion-Resistant Agent

The rust-inhibiting and corrosion-resistant agent is a component included to improve the corrosion resistance of the zinc alloy plated steel sheet, and may be at least one selected from the group consisting of a phosphoric acid-based rust inhibitor, a fluorine-based rust inhibitor, a vanadium-based rust inhibitor, a cerium salt-based rust inhibitor, and a selenium salt-based rust inhibitor.

A content of the rust-inhibiting and corrosion-resistant agent may be 0.5 to 10 wt% with respect to 100 wt% of the solid content of the surface treatment composition. When the content of the rust-inhibiting and corrosion-resistant agent is less than 0.5 wt%, it may be difficult to secure blackening resistance and alkali resistance, and when the content of the rust-inhibiting and corrosion-resistant agent exceeds 10 wt%, it may be difficult to secure corrosion resistance. The rust-inhibiting and corrosion-resistant agent may be preferably 0.50 to 10.0 wt% with respect to 100 wt% of the solid content of the surface treatment composition.

Fingerprint-resistance improving Agent

The fingerprint-resistance improving agent may preferably be one or two or more selected from the group consisting of paraffin wax, olefin wax, carnauba wax, polyester wax, polypropylene wax, polyethylene-Teflon wax, and polyTeflon wax.

The content of the fingerprint-resistance improving agent may be 0.5 to 5 wt% with respect to 100 wt% of the solid content of the surface treatment composition. When the content of the fingerprint-resistance improving agent is less than 0.5 wt%, it may be difficult to secure sufficient fingerprint-resistance properties, and when the content of the fingerprint-resistance improving agent exceeds 5 wt%, it may be difficult to secure corrosion resistance. The fingerprint-resistance improving agent may be preferably 0.50 to 5.0 wt% with respect to 100 wt% of the solid content of the surface treatment composition.

Solvent

The surface treatment composition includes water as a solvent to dilute each component, and the water may be deionized water or distilled water. The solvent is included as a balance in addition to each component of the present disclosure, and the content thereof may be 60 to 80 wt%. Furthermore, the surface treatment composition according to an embodiment may further include N-Ethyl-2-pyrrolidone (NEP) as an auxiliary solvent to secure solution stability, and the N-ethyl-2-pyrrolidone may be included in an amount of 20 to 40 wt% of the total solvent.

The zinc alloy plated steel sheet surface-treated using a surface treatment composition containing a water-soluble organic resin, an oxidation-discoloration inhibitor, and a corrosion-resistant inorganic compound according to an embodiment of the present disclosure has not only excellent corrosion resistance and excellent contamination discoloration resistance, but also excellent surface color and gloss. In addition, the surface treatment composition according to an embodiment of the present disclosure does not contain hexavalent chromium, which is a hazardous environmental substance, and includes a water-soluble organic resin and an inorganic compound that are harmless to the human body as main components, thereby having the effect of preventing damage to the human body and environmental pollution.

According to an embodiment of the present disclosure, a zinc alloy plated steel sheet surface-treated using the above-described surface treatment composition is provided.

Specifically, the surface-treated zinc alloy plated steel sheet may include a steel sheet, a zinc alloy plating layer formed on at least one surface of the steel sheet, and a surface treatment coating layer formed on the zinc alloy plating layer.

An example of the zinc alloy plating layer may be a ternary hot-dip zinc alloy plating layer, and a specific example may be a plating layer including Al: 0.2 to 15 wt%, Mg: 0.5 to 3.5 wt%, and a balance of Zn and inevitable impurities.

In a ternary hot-dip zinc alloy plated steel sheet, Mg plays a significantly decisive role in improving the corrosion resistance of the ternary hot-dip zinc alloy plated steel sheet, and effectively prevents corrosion of the ternary hot-dip zinc alloy plated steel sheet by forming a dense zinc hydroxide-based corrosion product on a surface of a plating layer under a corrosive environment. In order to secure the corrosion resistance effect desired in the present disclosure, the plating layer should include at least 0.5 wt% of Mg, and more preferably, at least 0.9 wt%. However, when the content is excessive, Mg oxidizing dross rapidly forms on a surface of a plating bath, thereby offsetting the oxidation-resistance effect of the trace element addition. In order to prevent this issue, Mg should be included in the plating layer in the content of 3.5 wt% or less, and more preferably, in the content of 3.2 wt% or less.

On the other hand, in the ternary hot-dip zinc alloy plated steel sheet, Al suppresses the formation of Mg oxide dross in the plating bath, and reacts with Zn and Mg in the plating bath to form a Zn-Al-Mg intermetallic compound, thereby improving the corrosion resistance of the plating steel sheet. In order to obtain the above effect, Al should be included in the plating layer in the content of 0.2 wt% or more, and more preferably, in the content of 0.9 wt% or more. However, when the content is excessive, the weldability and phosphate treatment properties of a plating steel material may deteriorate. In order to prevent this issue, Al should be included in the plating layer in the content of 15 wt% or less, and more preferably, in the content of 12 wt% or less.

The ternary hot-dip zinc alloy plated steel sheet may include an Al-enriched layer formed at an interface of the steel sheet and the ternary hot-dip zinc alloy plating layer, and an occupancy area ratio of the Al-enriched layer may be 70% to 100%, more preferably, 73% to 100%. Here, the occupancy area ratio refers to a ratio of an area of the Al-enriched layer to an area of a base steel assuming a plane without considering three-dimensional curvature, and the like, when projected from a surface of a plated steel sheet in a thickness direction of the base steel. When the occupancy area ratio of the Al-enriched layer is secured to 70% or more, the Al-enriched layer has a form in which fine particles are continuously formed, so that the plating properties and plating adhesion may be significantly improved.

The surface treatment coating layer formed on the zinc alloy plating layer may be formed from a surface treatment composition including, with respect to 100 wt% of the solid content of the composition, 70 to 90 wt% of a resin mixture including a high molecular weight polysilicon-modified polyurethane main resin, a low molecular weight polysilicon-modified polyurethane auxiliary resin and an epoxy auxiliary resin; 5 to 25 wt% of a melamine-based curing agent; 0.5 to 10 wt% of an oxidation-discoloration inhibitor; 0.5 to 10 wt% of a silane compound; 0.5 to 10 wt% of a rust-inhibiting and corrosion-resistant agent; and 0.5 to 5 wt% of a fingerprint-resistance improving agent. Since the surface treatment composition has the same technical characteristics as those described above, they will not be described repeatedly.

The surface treatment coating layer is a coating layer formed by drying the surface treatment composition described above, and corresponds to the remaining component after all volatile substances included in the surface treatment coating layer containing the organic resin and inorganic compound have evaporated. Accordingly, the surface treatment coating layer containing the organic resin and inorganic compound does not include water or N-ethyl-2-pyrrolidone as a solvent, and also does not include the solvent included in the surface treatment component containing the organic resin and inorganic compound. Accordingly, the component contained in the surface treatment coating layer containing the organic resin and inorganic compound corresponds to a content based on 100 wt% of the total solid content.

According to an embodiment of the present disclosure, a method for manufacturing a zinc alloy plated steel sheet surface-treated using the surface treatment composition is provided.

The manufacturing method includes an operation of coating the surface treatment composition on the zinc alloy plated steel sheet on which a hot-dip zinc alloy plated steel sheet layer is formed; and an operation of drying the surface treatment composition to form a surface treatment coating layer.

The surface treatment composition may be coated with a thickness of 2.5 to 50 $\mu$m. In addition, the coated surface treatment composition may form a dry coating layer through a drying process, and a thickness of the dry coating layer may be 1 to 10 $\mu$m. When a coating thickness of the surface treatment composition is less than 2.5 $\mu$m, the surface treatment composition may be applied significantly thinly on an acid portion of a steel sheet roughness, which may cause a problem of reduced corrosion resistance, and when the thickness exceeds 50 $\mu$m, the coating layer may be formed significantly thick, which may cause a deterioration in processability, and may cause a problem of economic efficiency due to an increase in costs of solution treatment.

A method for coating the surface treatment composition is not particularly limited as long as the method is a commonly performed coating method, but the coating may be preferably performed by any one coating method selected from, for example, roll coating, spraying, dipping, spray squeezing, and dipping squeezing.

The process of drying the surface treatment composition coated on the zinc alloy plated steel sheet may be preferably performed at a temperature range of 70 to 250°C based on a final arrival temperature (PMT) of a material steel sheet. When a drying temperature is less than 70°C based on the final arrival temperature (PMT) of the material steel sheet, a curing reaction of the organic resin may not be completely performed, and thus, a solid coating structure may not be formed, and corrosion resistance and alkali resistance may be deteriorated. On the other hand, when the drying temperature exceeds 250°C based on the final arrival temperature (PMT) of the material steel sheet, the work productivity may be deteriorated due to the generation of water vapor and fumes during the water cooling process, and the surface quality of the product may be deteriorated due to a condensation phenomenon in which the evaporated water vapor is condensed on an upper portion of drying equipment.

Meanwhile, the drying process may be preferably performed in a hot air drying furnace or an induction heating furnace. When the surface treatment composition is dried using the hot air drying furnace, an internal temperature of the hot air drying furnace may be preferably 100 to 300°C. When drying the surface treatment composition using the induction heating furnace, a current applied to the induction heating furnace may be preferably 1000 to 5000 A, and more preferably 1500 to 3500 A. When the internal temperature of the hot air drying furnace is less than 100°C or the current applied to the induction heating furnace is less than 1000A, the curing reaction of the surface treatment composition may not be completely performed, and thus the corrosion resistance and alkali resistance may be deteriorated. In addition, when the internal temperature of the hot air drying furnace exceeds 300°C or the current applied to the induction heating furnace exceeds 5000A, the work productivity may be deteriorated due to the generation of water vapor and fumes during the water cooling process, and the surface quality of the product may be deteriorated due to the condensation phenomenon in which the evaporated water vapor is condensed on the upper portion of the drying equipment.

In addition, after drying the surface treatment composition to form a surface treatment coating layer, the surface treatment coating layer may be cooled with water to finally provide a surface-treated zinc alloy plated steel sheet.

The method for manufacturing a zinc alloy plated steel sheet according to an embodiment of the present disclosure may be performed in a continuous process, and the velocity of the continuous process may be preferably 80 to 120 mpm. When the velocity of the continuous process is less than 80 mpm, a problem of reduced productivity may occur, and when the velocity exceeds 120 mpm, the solution may be scattered during the process of drying the surface treatment composition, which may cause surface defects.

Mode for Invention

Hereinafter, embodiments of the present disclosure will be described. It will be apparent to those skilled in the art that various modifications may be made to the following embodiments without departing from the scope of the present disclosure. The following embodiments are intended for understanding the present disclosure, and the scope of the rights of the present disclosure should not be limited to the following embodiments, but should be determined by the claims described below as well as equivalents thereof.

(Example)

Manufacturing of Test Specimen

As a zinc alloy plated steel sheet, a ternary zinc alloy plated steel sheet in which a ternary zinc alloy plating layer includes, by wt%, Mg: 1.5%, Al: 1.5% and a balance of Zn (a plating amount on a single surface of 0.5 to 2.0g/m$^2$) is cut to a size of 7cm x 15cm (width x length) to remove oil, and then, the respective manufactured compositions were applied to the zinc alloy plated steel sheet using a bar coater. Then, the test specimen was manufactured by curing the composition under the condition of a Peak Metal Temperature (PMT) 180±20°C.

Test and Evaluation Method

In this example, a property evaluation method and evaluation criteria of the surface-treated steel sheet are as follows.

<Flat Plate Corrosion Resistance>

According to the method specified in ASTM B117, a rate of white rust occurrence of the steel sheet over time was measured after processing the specimen. The evaluation criteria are as follows.

◎: Time until white rust occurrence was 144 hours or more
○: Time until white rust occurrence was 96 hours or more but less than 144 hours
△: Time until white rust occurrence was 55 hours or more but less than 96 hours
×: Time until white rust occurrence was less than 55 hours

<Corrosion Resistance of Processed Portion>

The specimen was pushed upwardly to a height of 6 mm using an Erichsen tester, and a degree of white rust occurrence was measured after 24 hours. The evaluation criteria are as follows.

◎: Less than 5% of a white rust area after 48 hours
○: 5% or more and less than 7% of the white rust area after 48 hours
×: 7% or more of the white rust area after 48 hours

<Oxidation-Discoloration Resistance>

0.05 ml of artificial sweat was dropped on a specimen surface at 5 locations at intervals of about 10 mm, and was left in a constant temperature and humidity chamber at 65°C and 90 to 95% humidity for 48 hours, and then were washed with tap water, and the surface was evaluated by observation of the eye. 1 liter of the artificial sweat solution was made and used by dissolving 8g of sodium phosphate, 8g of sodium chloride, 5g of acetic acid in distilled water under about 4.5 pH (finely adjusted with sodium hydroxide).

In this case, the evaluation criteria were as follows.

◎: Excellent, no surface discoloration
○: Good, slight surface marks

△: Moderate, light gray surface discoloration
✕: Poor, surface blackening discoloration

<Alkali Resistance>

The specimen was immersed in an alkaline degreasing solution at 60°C for 2 minutes, then washed and air-blown, and pre/post color difference (ΔE) was measured. As the alkaline degreasing solution, Finecleaner L 4460 A: 20g/2.4L + L 4460 B 12g/2.4L (pH=12) from Daehan Parkerizing Co., Ltd, was used. In this case, the evaluation criteria were as follows.

◎:

$$\Delta E \leq 2$$

○:

$$2 < \Delta E \leq 3$$

△:

$$3 < \Delta E \leq 4$$

X:

$$\Delta E > 4$$

<Fingerprint-resistance>

After applying a thin layer of Vaseline evenly to the surface of the specimen, the Vaseline was wiped off with gauze, and the pre/post color difference (ΔE) of the specimen before and after Vaseline application was measured. In this case, the evaluation criteria were as follows.

◎:

$$\Delta E \leq 2$$

○:

$$2 < \Delta E \leq 3$$

△:

$$3 < \Delta E \leq 4$$

X:

$$\Delta E > 4$$

<Solution Stability>

The surface treatment composition was placed in a container and inserted in a constant temperature oven at a temperature of 50°C, was stored for 7 days, and it was visually observed whether sediment occurred, and the viscosity change was measured. In this case, the evaluation criteria were as follows.

○: No sedimentation, viscosity change less than 1cP
△: No sedimentation, viscosity change 1cP or more but less than 5cP

×: Sedimentation occurred, or viscosity change 5cP or more

<Gloss>

The gloss of the specimen was measured at an incident angle of 60° using a gloss meter. In this case, the evaluation criteria were as follows.

   ∘: Good, gloss value 80 or more
   ×: Poor, gloss value less than 80

Components of Surface Treatment Composition

The components of the surface treatment composition used in this embodiment were as follows.
The components of the surface treatment composition used in this embodiment were as follows.

Resin Mixture

- High molecular weight polysilicon-modified polyurethane main resin (A) : Polyurethane resin with a weight average molecular weight of 150,000
- Low molecular weight polysilicon-modified polyurethane auxiliary resin (auxiliary resin 1, B): Polyurethane resin having a weight average molecular weight of 50,000
- Epoxy auxiliary resin (auxiliary resin 2, C): Epoxy resin having an equivalent ratio of 500 g/eq and a weight average molecular weight of 2,000

Melamine-based curing agent: Ethoxymethylmelamine

   Oxidation-discoloration inhibitor: Ammonium molybdate
   Silane compound: 3-Aminopropyltriepoxy silane
   Rust-inhibiting and corrosion-resistant agent: Fluorine-based rust inhibitor
   Fingerprint-resistance improving agent: Polyethylene-Teflon wax
   Solvent: Mixture of water and N-ethyl-2-pyrrolidone (NEP) Solvent

**Example 1: Changes in physical properties according to the content of the resin mixture**

A surface treatment composition was manufactured by mixing a resin mixture in which the main resin, the auxiliary resin 1 and the auxiliary resin 2 described above were mixed in a weight ratio of 1:0.5:0.5, a curing agent, an oxidation-discoloration inhibitor, the silane compound, the rust-inhibiting and corrosion-resistant agent, and a fingerprint-resistance improving agent in the contents described in Table 1. The surface treatment composition included a mixed solvent of 49 wt% of water and 21 wt% of N-ethyl-2-pyrrolidone (70 wt% based on the total weight of the composition).
The solution stability of the manufactured surface treatment composition was evaluated. In addition, after applying the surface treatment composition to the test specimen described above, flat plate corrosion resistance, processed portion corrosion resistance, oxidation blackening resistance, and alkali resistance of the specimen were evaluated. The evaluation results are illustrated in Table 1 below.

Table 1:

| Division | Composition of the composition (wt%) | | | | | | Flat plate corrosion | Processed portion corrosion resistance | Oxidation and discoloration resistance | Alkali resistance | Solution stability |
|---|---|---|---|---|---|---|---|---|---|---|---|
| | Resin Mixture | Melamine-based Curing Agent | Oxidation-Discoloration Inhibitor | Silane compound | Rust-inhibiting and corrosion-resistant agent | Fingerprint-resistance improving agent | | | | | |
| Comparative Example 1 | 67 | 10 | 10 | 10 | 2 | 1 | X | X | ○ | X | ○ |
| Inventive Example 1 | 70 | 9 | 9.5 | 10 | 1 | 0.5 | ○ | ◎ | ○ | ○ | ○ |
| Inventive Example 2 | 80 | 5 | 5.5 | 8 | 1 | 0.5 | ◎ | ◎ | ◎ | ◎ | ○ |
| Inventive Example 3 | 90 | 5 | 2 | 1.5 | 1 | 0.5 | ◎ | ◎ | ◎ | ◎ | ○ |
| Comparative Example 2 | 92 | 5 | 1.5 | 0.5 | 0.5 | 0.5 | X | X | X | ○ | X |
| * The composition content is as follows referring to Table 1 above based on 30 wt% solid content, | | | | | | | | | | | |

Referring to Table 1 above, Inventive examples 1 to 3, in which the content of the resin mixture satisfies the content proposed by the present disclosure, exhibited results of good (○) or higher in all properties. However, Comparative Example 1 in which the content of the resin mixture was significantly low exhibited poor results in the flat plate corrosion resistance, the processed portion corrosion resistance and the alkali resistance, and Comparative Example 2 in which the content of the resin mixture was significantly high exhibited poor results in the flat plate corrosion resistance, the processed portion corrosion resistance, the blackening resistance and the solution stability.

**Example 2: Changes in physical properties according to a content ratio of the main resin and the auxiliary resin**

A surface treatment composition was manufactured, which included 80 wt% of a resin mixture including the main resin (A), the auxiliary resin 1 (B) and the auxiliary resin 2 (C) described above, 5 wt% of the curing agent, 5.5 wt% of the oxidation and discoloration inhibitor, 8 wt% of the silane compound, 1 wt% of the rust-inhibiting and corrosion-resistant agent, and 0.5 wt% of a fingerprint-resistance improving agent.

The surface treatment composition included a mixed solvent (70 wt% based on the total weight of the composition) of 49 wt% of water and 21 wt% of N-ethyl-2-pyrrolidone.

In the resin mixture, the main resin, the auxiliary resin 1 and the auxiliary resin 2 were mixed in the weight ratios shown in Table 2 below. After applying the surface treatment composition to the test specimen described above, the flat plate corrosion resistance, the processed portion corrosion resistance, the oxidation blackening resistance and the alkali resistance of the specimen were evaluated, and the evaluation results are shown in Table 2 below.

Table 2:

| Division | Weight Ratio (A:B:C) | | | Flat plate corrosion resistance | Processed portion corrosion resistance | Oxidation Discoloration Resistance | Alkali resistance |
|---|---|---|---|---|---|---|---|
| | Main resin (A) | Auxiliary resin 1(B) | Auxiliary resin 2 (C) | | | | |
| Inventive Example 4 | 5 | 47.5 | 47.5 | ○ | ○ | ○ | ○ |
| Inventive Example 5 | 10 | 45 | 45 | ○ | ◎ | ○ | ○ |

(continued)

| Division | Weight Ratio (A:B:C) | | | Flat plate corrosion resistance | Processed portion corrosion resistance | Oxidation Discoloration Resistance | Alkali resistance |
|---|---|---|---|---|---|---|---|
| | Main resin (A) | Auxiliary resin 1(B) | Auxiliary resin 2 (C) | | | | |
| Inventive Example 6 | 50 | 25 | 25 | ◎ | ◎ | ◎ | ◎ |
| Inventive Example 7 | 67 | 16.5 | 16.5 | ◎ | ◎ | ◎ | ◎ |
| Inventive Example 8 | 90 | 5 | 5 | ◎ | ◎ | ◎ | ◎ |
| Inventive Example 9 | 95 | 2.5 | 2.5 | ○ | ○ | ○ | ○ |
| * The composition content is based on 30 wt% of the solid content | | | | | | | |

Referring to Table 2, Inventive Examples 4 to 9 exhibited results of good (○) or higher in all properties. However, in the case of Inventive Examples 5 to 9, in which the weight ratio of the main resin and the auxiliary resin satisfies the content ratio preferably proposed by the present disclosure, better effects were confirmed in terms of the flat plate corrosion resistance, the processed corrosion resistance, the oxidation resistance and the alkali resistance.

## Example 3: Changes in properties according to the content of the curing agent

A surface treatment composition was manufactured by mixing a resin mixture in which the main resin, auxiliary resin 1 and auxiliary resin 2 described above were mixed in a weight ratio of 1:0.5:0.5, a curing agent, an oxidation-discoloration inhibitor, a silane compound, a rust-inhibiting and corrosion-resistant agent and a fingerprint-resistance improving agent in the contents described in Table 3. The surface treatment composition includes a mixed solvent (70 wt% based on the total weight of the composition) of 49 wt% of water and 21 wt% of N-ethyl-2-pyrrolidone.

The solution stability of the surface treatment composition manufactured above was evaluated. In addition, after applying the surface treatment composition to the test specimen described above, the flat plate corrosion resistance, the processed portion corrosion resistance, the oxidation discoloration resistance and the alkali resistance of the specimen were evaluated. The evaluation results are shown in Table 3 below.

Table 3:

| Division | Composition of the composition (wt%) | | | | | | Flat plate corrosion | Processed portion corrosion resistance | Oxidation and discoloration resistance | Alkali resistance | Solution stability |
|---|---|---|---|---|---|---|---|---|---|---|---|
| | Curing agent | Resin Mixture | Oxidation - Discoloration Inhibitor | Silane compound | Rust-inhibiting and corrosion - resistant agent | Fingerprint-resistance improving agent | | | | | |
| Comparative Example 3 | 4 | 84 | 5 | 5 | 1 | 1 | X | X | X | X | ○ |
| Inventive Example 10 | 5 | 84 | 5 | 4 | 1 | 1 | ○ | ○ | ○ | ○ | ○ |
| Inventive Example 11 | 15 | 74 | 5 | 4 | 1 | 1 | ◎ | ◎ | ◎ | ◎ | ○ |
| Inventive Example 12 | 25 | 70 | 2 | 1 | 1 | 1 | ◎ | ◎ | ○ | ◎ | ○ |

(continued)

| Division | Composition of the composition (wt%) | | | | | | Flat plate corrosion | Processed portion corrosion resistance | Oxidation and discoloration resistance | Alkali resistance | Solution stability |
|---|---|---|---|---|---|---|---|---|---|---|---|
| | Curing agent | Resin Mixture | Oxidation-Discoloration Inhibitor | Silane compound | Rust-inhibiting and corrosion-resistant agent | Fingerprint-resistance improving agent | | | | | |
| Comparative Example 4 | 26 | 70 | 1 | 1 | 1 | 1 | ○ | ○ | ○ | X | X |
| *The composition content is based on 30 wt% of the solid content | | | | | | | | | | | |

Referring to Table 3 above, Inventive Examples 10 to 12, in which the content of the melamine-based curing agent satisfies the content proposed by the present disclosure, exhibited results of good (○) or higher in all properties. On the other hand, when the melamine-based curing agent was added significantly low (Comparative Example 3), all properties except solution stability exhibited poor results, and when the content of the melamine-based curing agent was added to be significantly high (Comparative Example 4), alkali resistance and solution stability exhibited poor results.

**Example 4: Changes in properties according to the content of the oxidation-discoloration inhibitor**

A surface treatment composition was manufactured by mixing a resin mixture in which the main resin, the auxiliary resin 1 and the auxiliary resin 2 described above were mixed in a weight ratio of 1:0.5:0.5, a curing agent, an oxidation-discoloration inhibitor, a silane compound, an rust-inhibiting and corrosion-resistant agent and a fingerprint-resistance improving agent in the contents described in Table 4. The surface treatment composition includes a mixed solvent (70 wt% based on the total weight of the composition) of 49 wt% of water and 21 wt% of N-ethyl-2-pyrrolidone.
The solution stability of the surface treatment composition manufactured above was evaluated. In addition, after applying the surface treatment composition to the test specimen described above, the flat plate corrosion resistance, the processed portion corrosion resistance, oxidation discoloration resistance, and the alkali resistance of the specimen were evaluated. The evaluation results are shown in Table 4 below.

Table 4:

| Division | Composition of the composition (wt%) | | | | | | Flat plate corrosion | Processed portion corrosion resistance | Oxidation Discoloration Resistance | Alkali resistance | Solution stability |
|---|---|---|---|---|---|---|---|---|---|---|---|
| | Oxidation-discoloration inhibitor | Resin Mixture | Curing agent | Silane compound | Rust-inhibiting and corrosion-resistant agent | Fingerprint-resistance improving agent | | | | | |
| Comparative Example 5 | 0.3 | 82.2 | 8 | 8 | 1 | 0.5 | ○ | ○ | X | X | ○ |
| Inventive Example 13 | 0.5 | 82 | 8 | 8 | 1 | 0.5 | ○ | ○ | ○ | ○ | ○ |
| Inventive Example 14 | 5 | 77.5 | 8 | 8 | 1 | 0.5 | ◎ | ◎ | ◎ | ◎ | ○ |

(continued)

| Division | Composition of the composition (wt%) | | | | | | Fla t pla te cor ros ion | Proce ssed porti on corro sion res ist tance | Oxi dat ion Dis col ora tio n Res ist anc e | Alkal i resis tance | Solu tion stab ilit y |
|---|---|---|---|---|---|---|---|---|---|---|---|
| | Oxi dat ion - dis col ora tio n inh ibi tor | Resin Mixtu re | Cur ing age nt | Sil ane com pou nd | Rus t-inh ibi tin g and cor ros ion - res ist ant age nt | Fing erpr int-resi stan ce impr ovin g agen t | | | | | |
| Inventive Example 15 | 10 | 72.5 | 8 | 8 | 1 | 0.5 | ◎ | ◎ | ◎ | ◎ | ○ |
| Comparative Example 6 | 12 | 72.5 | 7 | 7 | 1 | 0.5 | X | X | ◎ | ◎ | X |
| * The composition content is based on 30 wt% of the solid content | | | | | | | | | | | |

Referring to Table 4 above, Inventive examples 13 to 15, which include an oxidation-discoloration inhibitor content satisfying the content proposed by the present disclosure, exhibited results of good (○) or higher in all properties. On the other hand, Comparative Example 5 in which the content of the oxidation-discoloration inhibitor was significantly low exhibited poor oxidation-discoloration resistance and alkali resistance, and Comparative Example 6 in which the content of the oxidation-discoloration inhibitor was two high exhibited poor plate corrosion resistance, processed portion corrosion resistance, and solution stability.

**Example 5: Changes in properties according to silane compound content**

A surface treatment composition was manufactured by mixing a resin mixture in which the main resin, the auxiliary resin 1 and the auxiliary resin 2 described above were mixed in a weight ratio of 1:0.5:0.5, a curing agent, an oxidation-discoloration inhibitor, a silane compound, an rust-inhibiting and corrosion-resistant agent and a fingerprint-resistance improving agent in the contents described in Table 5 to prepare. The surface treatment composition includes a mixed solvent (70 wt% based on the total weight of the composition) of 49 wt% of water and 21 wt% of N-ethyl-2-pyrrolidone.

The solution stability of the surface treatment composition prepared above was evaluated. In addition, after applying the surface treatment composition to the test specimen described above, the flat plate corrosion resistance, the processed portion corrosion resistance, the oxidation discoloration resistance and the alkali resistance of the specimen were evaluated. The evaluation results are shown in Table 4 below.

Table 5:

| Division | Composition of the composition (wt%) | | | | | | Fla t pla te corros ion | Proce ssed porti on corrosion resis tance | Oxi dat ion Dis colora tio n Res ist anc e Alkal i resis tance | | Solu tion stab ilit y |
|---|---|---|---|---|---|---|---|---|---|---|---|
| | Sil ane compou nd | Resin Mixtu re | Cur ing agent | Oxi dat ion-dis col ora tio n inh ibi tor | Rus t-inhibi tin g and cor ros ion - res ist ant agent | Fing erpr int-resi stan ce impr ovin g agent | | | | | |
| Comparative Example 7 | 0.3 | 82.2 | 8 | 5.5 | 2.5 | 1.5 | X | X | X | ○ | ○ |

(continued)

| Division | Composition of the composition (wt%) | | | | | | Fla t pla te corros ion | Proce ssed porti on corrosion resis tance | Oxi dat ion Dis colora tio n Res ist anc e Alkal i resis tance | | Solu tion stab ilit y |
|---|---|---|---|---|---|---|---|---|---|---|---|
| | Sil ane compou nd | Resin Mixtu re | Cur ing agent | Oxi dat ion-dis col ora tio n inh ibi tor | Rus t-inhibi tin g and cor ros ion-res ist ant agent | Fing erpr int-resi stan ce impr ovin g agent | | | | | |
| Inventive Example 16 | 0.5 | 82 | 8 | 5.5 | 2.5 | 1.5 | ○ | ◎ | ○ | ○ | ○ |
| Inventiv e Example 17 | 5 | 77.5 | 8 | 5.5 | 2.5 | 1.5 | ◎ | ◎ | ◎ | ◎ | ○ |
| Inventiv e Example 18 | 10 | 72.5 | 8 | 5.5 | 2.5 | 1.5 | ◎ | ◎ | ◎ | ◎ | ○ |
| Comparat ive Example 8 | 12 | 72.5 | 7 | 5 | 2.5 | 1 | ○ | X | X | ○ | ○ |
| * The composition content is based on 30 wt% of the solid content | | | | | | | | | | | |

Referring to Table 5 above, when the content of the silane compound satisfies the content proposed by the present disclosure (Inventive Examples 16 to 18), all physical properties exhibited better than good results.

On the other hand, when the silane compound was added in a significantly low amount (Comparative Example 7), the flat plate corrosion resistance, post-processed corrosion resistance, and oxidation discoloration resistance exhibited poor results, and when the content of the silane compound was added to be significantly high (Comparative Example 8), the dryness of the coating increased to form a hard coating, resulting in poor corrosion resistance of the processed portion and poor oxidation discoloration resistance.

A surface treatment solution composition according to Inventive Example 17 above was used, but as the type of silane hydrolysis compound a silane coupling agent described in Table 6 below was used. As described above, a specimen was manufactured using the composition using the silane coupling agent described in Table 6 below, and the flat plate corrosion resistance was evaluated, and the results are described in Table 6.

Table 6:

| Division | | a | b | c | d | e | f | g | h | i | j | k | flat plat e corr osion resi stan ce |
|---|---|---|---|---|---|---|---|---|---|---|---|---|---|
| | | Con ten t | Con ten t | Con ten t | Con ten t | Con ten t | Con ten t | Con ten t | Con ten t | Con ten t | Con ten t | Con ten t | |
| Inventive Example 19 | 5 | 0 | 0 | 0 | 0 | 0 | 0 | 0 | 0 | 0 | 0 | ○ | |
| Inventive Example 20 | 0 | 5 | 0 | 0 | 0 | 0 | 0 | 0 | 0 | 0 | 0 | ◎ | |

(continued)

| Division | | a<br>Content | b<br>Content | c<br>Content | d<br>Content | e<br>Content | f<br>Content | g<br>Content | h<br>Content | i<br>Content | j<br>Content | k<br>Content | flat plate corrosion resistance |
|---|---|---|---|---|---|---|---|---|---|---|---|---|---|
| Inventive Example 21 | 0 | 0 | 5 | 0 | 0 | 0 | 0 | 0 | 0 | 0 | 0 | ○ | |
| Inventive Example 22 | 0 | 0 | 0 | 5 | 0 | 0 | 0 | 0 | 0 | 0 | 0 | ◎ | |
| Inventive Example 23 | 0 | 0 | 0 | 0 | 5 | 0 | 0 | 0 | 0 | 0 | 0 | ○ | |
| Inventive Example 24 | 0 | 0 | 0 | 0 | 0 | 5 | 0 | 0 | 0 | 0 | 0 | ◎ | |
| Inventive Example 25 | 0 | 0 | 0 | 0 | 0 | 0 | 5 | 0 | 0 | 0 | 0 | ○ | |
| Inventive Example 26 | 0 | 0 | 0 | 0 | 0 | 0 | 0 | 5 | 0 | 0 | 0 | ○ | |
| Inventive Example 27 | 0 | 0 | 0 | 0 | 0 | 0 | 0 | 0 | 5 | 0 | 0 | ○ | |
| Inventive Example 28 | 0 | 0 | 0 | 0 | 0 | 0 | 0 | 0 | 0 | 5 | 0 | ◎ | |
| Inventive Example 29 | 0 | 0 | 0 | 0 | 0 | 0 | 0 | 0 | 0 | 0 | 5 | ○ | |
| Inventive Example 30 | 2.5 | 2.5 | 0 | 0 | 0 | 0 | 0 | 0 | 0 | 0 | 0 | ○ | |
| Inventive Example 31 | 2.5 | 0 | 0 | 2.5 | 0 | 0 | 0 | 0 | 0 | 0 | 0 | ○ | |
| Inventive Example 32 | 0 | 2.5 | 0 | 0 | 0 | 2.5 | 0 | 0 | 0 | 0 | 0 | ◎ | |
| Inventive Example 33 | 0 | 0 | 0 | 2.5 | 0 | 2.5 | 0 | 0 | 0 | 0 | 0 | ○ | |
| Inventive Example 34 | 0 | 0 | 0 | 0 | 2.5 | 0 | 2.5 | 0 | 0 | 0 | 0 | ○ | |

(continued)

| Division | | a Content | b Content | c Content | d Content | e Content | f Content | g Content | h Content | i Content | j Content | k Content | flat plate corrosion resistance |
|---|---|---|---|---|---|---|---|---|---|---|---|---|---|
| Inventive Example 35 | 0 | 0 | 0 | 0 | 0 | 2.5 | 0 | 0 | 0 | 2.5 | 0 | ◎ | |
| Inventive Example 36 | 0 | 0 | 2.5 | 0 | 0 | 2.5 | 0 | 0 | 0 | 0 | 0 | ○ | |
| Inventive Example 37 | 0 | 0 | 0 | 0 | 0 | 0 | 2.5 | 0 | 0 | 2.5 | 0 | ○ | |
| Inventive Example 38 | 2.5 | 0 | 0 | 0 | 0 | 0 | 0 | 0 | 0 | 2.5 | 0 | ○ | |
| Inventive Example 39 | 0 | 0 | 0 | 0 | 0 | 0 | 0 | 0 | 0 | 2.5 | 2.5 | ○ | |
| Inventive Example 40 | 0 | 0 | 0 | 2.5 | 0 | 0 | 0 | 0 | 2.5 | 0 | 0 | ○ | |
| Inventive Example 41 | 0 | 0 | 0 | 0 | 2.5 | 0 | 0 | 2.5 | 0 | 0 | 0 | ○ | |
| Inventive Example 42 | 0 | 0 | 0 | 0 | 0 | 0 | 0 | 2.5 | 0 | 0 | 2.5 | ○ | |
| Inventive Example 43 | 0 | 2.5 | 2.5 | 0 | 0 | 0 | 0 | 0 | 0 | 0 | 0 | ◎ | |
| Inventive Example 44 | 0 | 2 | 2 | 0 | 0 | 0 | 0 | 0 | 0 | 0 | 1 | ○ | |
| Inventive Example 45 | 0 | 0 | 0 | 1 | 0 | 0 | 2 | 0 | 2 | 0 | 0 | ○ | |
| Inventive Example 46 | 0 | 0 | 0 | 0 | 2 | 1 | 0 | 0 | 2 | 0 | 0 | ○ | |
| Inventive Example 47 | 0 | 2 | 0 | 3.5 | 0 | 0 | 1 | 0 | 0 | 0 | 2 | ○ | |
| Inventive Example 48 | 0 | 2 | 0 | 0 | 0 | 0 | 0 | 0 | 0 | 1 | 2 | ◎ | |

(continued)

| Division | a Content | b Content | c Content | d Content | e Content | f Content | g Content | h Content | i Content | j Content | k Content | flat plate corrosion resistance |
|---|---|---|---|---|---|---|---|---|---|---|---|---|
| Inventive Example 49 | 2 | 0 | 2 | 0 | 0 | 0 | 0 | 0 | 0 | 0 | 1 | ○ |
| Inventive Example 50 | 0 | 1 | 0 | 0 | 0 | 0 | 0 | 0 | 2 | 2 | 0 | ○ |
| Inventive Example 51 | 0 | 2 | 0 | 0 | 1 | 0 | 0 | 0 | 0 | 2 | 0 | ○ |
| Inventive Example 52 | 0 | 0 | 0 | 0 | 0 | 0 | 2 | 2 | 0 | 0 | 1 | ○ |

| | |
|---|---|
| a: 2-(3,4-epoxycyclohexyl)-ethyltrimethoxysilane | g: N-2-(aminoethyl)-3-aminopropyl triethoxysilane |
| b: 3-glycidoxypropyl trimethoxysilane | h: 3-aminopropyl trimethoxy silane |
| c: 3-glycidoxypropyl methyldiethoxysilane | i: 3-aminopropyl triethoxy silane |
| d: 3-glycidoxypropyl triethoxysilane | j: vinyltriepoxy silane |
| e: N-2-(aminoethyl)-3-aminopropyl methyldimethoxysilane | k: methyltrimethoxy silane |
| f: N-2-(aminoethyl)-3-aminopropyl trimethoxysilane | |

As illustrated in Table 6 above, Inventive Examples 19 to 52 showed good or excellent results in the flat plate corrosion resistance. Specifically, in the case of the test specimen treated with the surface treatment solution composition manufactured according to the composition of Inventive Example 48, a white rust area that occurred after 144 hours or more was 0%, which exhibited the best results.

**Example 6: Changes in physical properties according to the content of rust-inhibiting and corrosion-resistant agent**

A surface treatment composition was manufactured by mixing a resin mixture in which the main resin, the auxiliary resin 1 and the auxiliary resin 2 described above were mixed in a weight ratio of 1:0.5:0.5, a curing agent, an oxidation-discoloration inhibitor, a silane compound, a rust-inhibiting and corrosion-resistant agent and a fingerprint-resistance property improving agent in the contents described in Table 7. The surface treatment composition includes a mixed solvent (70 wt% relative to the total weight of the composition) of 49 wt% of water and 21 wt% of N-ethyl-2-pyrrolidone.
The solution stability of the manufactured surface treatment composition was evaluated. In addition, after applying the surface treatment composition to the test specimen described above, the flat plate corrosion resistance, the processed portion corrosion resistance, the oxidation discoloration resistance, and the alkali resistance of the specimen were evaluated. The evaluation results are shown in Table 7 below.

Table 7:

| Division | Composition of the composition (wt%) | | | | | | Flat plate corrosion | Processed portion corrosion resistance | Oxidation Discoloration Resistance | Alkali resistance | Solution stability |
| | Rust-inhibiting and corrosion resistant agent | Resin Mixture | Curing agent | Oxidation discoloration inhibitor | Silane compound | Fingerprint resistance improving agent | | | | | |
|---|---|---|---|---|---|---|---|---|---|---|---|
| Comparative Example 9 | 0.3 | 82.2 | 8 | 1 | 8 | 0.5 | X | X | ○ | ○ | ○ |
| Inventive Example 53 | 0.5 | 82 | 8 | 1 | 8 | 0.5 | ○ | ◎ | ○ | ○ | ○ |
| Inventive Example 54 | 5 | 77.5 | 8 | 1 | 8 | 0.5 | ◎ | ◎ | ◎ | ◎ | ○ |
| Inventive Example 55 | 10 | 72.5 | 8 | 1 | 8 | 0.5 | ◎ | ◎ | ◎ | ◎ | ○ |
| Comparative Example 10 | 12 | 72.5 | 7 | 1 | 7 | 0.5 | ○ | ○ | X | X | ○ |
| *The composition content is based on 30 wt% of the solid content | | | | | | | | | | | |

Referring to Table 7 above, Inventive Examples 53 to 55 in which the content of the rust-inhibiting and corrosion-resistant agent satisfied the content proposed by the present disclosure exhibited results of good (○) or higher in all properties. However, Comparative Example 9 in which the content of the rust-inhibiting and corrosion-resistant agent was significantly low exhibited poor results in the flat plate corrosion resistance and the processed portion corrosion resistance, and Comparative Example 10 in which the content of the rust-inhibiting and corrosion-resistant agent was significantly high exhibited poor results in the oxidation discoloration resistance and alkali resistance.

**Example 7: Changes in properties according to the content of fingerprint-resistance improving agent**

A surface treatment composition was manufactured by mixing a resin mixture in which the main resin, the auxiliary resin 1 and the auxiliary resin 2 described above were mixed in a weight ratio of 1:0.5:0.5, a curing agent, an oxidation discoloration inhibitor, a silane compound, a rust-inhibiting and corrosion-resistant agent and a fingerprint-resistance improving agent in the contents described in Table 8. The surface treatment composition includes a mixed solvent (70 wt% based on the total weight of the composition) of 49 wt% of water and 21 wt% of N-ethyl-2-pyrrolidone.
The solution stability of the surface treatment composition manufactured above was evaluated. In addition, after applying the surface treatment composition to the test specimen described above, the flat plate corrosion resistance, the processed portion corrosion resistance, oxidation discoloration resistance, the alkali resistance and the fingerprint-resistance of the specimen were evaluated. The evaluation results are shown in Table 8 below.

Table: 8

| Division | Composition of the composition (wt%) | | | | | | Flat plate corrosion | Processed portion corrosion resistance | Oxidation Discoloration Resist | Alkali resistance | Fingerprintresistance | Solution stability |
|---|---|---|---|---|---|---|---|---|---|---|---|---|
| | Fingerprint-resistance improving agent | Resin Mixture | Curing agent | Oxidation Discoloration Inhibitor | Silane compound | Rust-inhibiting and corrosion resistant agent | | | | | | |
| Comparative Example 11 | 0.3 | 82.2 | 6 | 4.5 | 5 | 2 | ○ | ◎ | ○ | ○ | X | ○ |
| Inventive Example 56 | 0.5 | 82 | 6 | 4.5 | 5 | 2 | ○ | ◎ | ○ | ○ | ○ | ○ |
| Inventive Example 57 | 2 | 80.5 | 6 | 4.5 | 5 | 2 | ◎ | ◎ | ◎ | ◎ | ◎ | ○ |
| Inventive Example 58 | 5 | 80.5 | 5.5 | 3 | 5 | 1 | ◎ | ◎ | ◎ | ◎ | ◎ | ○ |
| Comparative Example 12 | 6 | 80 | 5 | 3 | 5 | 1 | X | X | ◎ | ○ | ◎ | X |
| * The composition content is based on 30 wt% of the solid content | | | | | | | | | | | | |

Referring to Table 8 above, Inventive Examples 56 to 58 in which the content of the fingerprint-resistance improving agent satisfied the content proposed by the present disclosure exhibited results of good (○) or higher in all properties. However, Comparative Example 11 in which the content of the fingerprint-resistance improving agent exhibited poor results in fingerprint-resistance, and Comparative Example 12 in which the content of the fingerprint-resistance improving agent was significantly high exhibited poor results in the flat plate corrosion resistance, the processed portion corrosion resistance and the solution stability.

**Example 8: Changes in properties according to a thickness and a drying temperature of a coating layer**

A surface treatment composition according to Inventive Example 2 was bar-coated on a test specimen and dried in a hot air dryer. The flat plate corrosion resistance, the processed portion corrosion resistance, the blackening resistance, and the alkali resistance of the specimen were evaluated while controlling the thickness of the coating layer and the PMT temperature as described in Table 9 below.

Table 9:

| Division | A thickness of the coating layer (μ) | Drying Temperature (°C) | Flat plate corrosion resistance | Processed portion corrosion resistance | Alkali resistance | Alkali resistance |
|---|---|---|---|---|---|---|
| Comparative Example 13 | 0.5 | 180 | Δ | X | Δ | Δ |
| Inventive Example 59 | 1 | 180 | ◎ | ◎ | ◎ | ◎ |
| Inventive Example 60 | 4 | 180 | ◎ | ◎ | ◎ | ◎ |
| Inventive Example 61 | 7 | 180 | ◎ | ◎ | ○ | ◎ |
| Inventive Example 62 | 10 | 180 | ◎ | ◎ | ○ | ◎ |

(continued)

| Division | A thickness of the coating layer (μ) | Drying Temperatu re (°C) | Flat plate corrosi on resista nce | Process ed portion corrosi on resista nce | Alkali resistanc e | Alkali resistan ce |
|---|---|---|---|---|---|---|
| Comparative Example 14 | 11 | 180 | ◎ | X | ○ | ◎ |
| Comparative Example 15 | 5 | 50 | X | X | X | X |
| Inventive Example 63 | 5 | 70 | ○ | ○ | ○ | Δ |
| Inventive Example 64 | 5 | 100 | ◎ | ◎ | ◎ | ◎ |
| Inventive Example 65 | 5 | 250 | ◎ | ◎ | ○ | ◎ |
| Comparative Example 16 | 5 | 270 | ◎ | ◎ | X | ◎ |

As shown in Table 9 above, Inventive Examples 59 to 65, in which the coating layer having a thickness of 1 to 10 μm was formed, exhibited results of good (○) or higher in all properties. On the other hand, Comparative Example 13, in which the formed coating was excessively thin, exhibited average (β) results in the plate corrosion resistance, the blackening resistance and the alkali resistance, and the corrosion resistance of the processed portion exhibited poor results. On the other hand, Comparative Example 14, in which an excessively thick coating was formed, exhibited poor results in corrosion resistance of the processed portion, and since there were no properties that were improved as compared to Inventive Example 62, the thickness of the coating exceeding 10 μm is not required from an economical perspective.

Meanwhile, as shown in Table 9 above, Inventive Examples 62 to 65, in which the coating was dried at a temperature range of 70 to 250°C to form a coating layer, exhibited results of good (○) or higher in all properties. On the other hand, Comparative Example 15, in which the drying temperature was excessively low, exhibited poor results in all properties because the coating was not sufficiently dried. On the other hand, Comparative Example 16, in which the drying temperature was excessively high, exhibited poor blackening resistance due to fume drops on the steel sheet caused by condensation of water vapor generated in the steel sheet during the air cooling process (water cooling) .


**Claims**

1. A surface treatment composition comprising a solid and a solvent, wherein the surface treatment composition comprises, by 100 wt% of the solid,

    70 to 90 wt% of a resin mixture including a high molecular weight polysilicon-modified polyurethane main resin, a low molecular weight polysilicon-modified polyurethane auxiliary resin, and an epoxy auxiliary resin;
    5 to 25 wt% of a melamine-based curing agent;
    0.5 to 10 wt% of an oxidation-discoloration inhibitor;
    0.5 to 10 wt% of a silane compound;
    0.5 to 10 wt% of a rust-inhibiting and corrosion-resistant agent; and
    0.5 to 5 wt% of a fingerprint-resistance improving agent.

2. The surface treatment composition of claim 1, wherein the high molecular weight polysilicon-modified polyurethane main resin (A), the low molecular weight polysilicon-modified polyurethane auxiliary resin (B), and the epoxy auxiliary resin (C) are mixed in a weight ratio of 1:4.5:4.5 to 9:0.5:0.5.

3. The surface treatment composition of claim 1, wherein the high molecular weight polysilicon-modified polyurethane main resin (A) has a glass transition temperature (Tg) of - 20°C to -10°C and a weight average molecular weight (Mw) of 100,000 to 200,000.

4. The surface treatment composition of claim 1, wherein the low molecular weight polysilicon modified polyurethane auxiliary resin (B) has a glass transition temperature (Tg) of -30°C to -20°C and a weight average molecular weight (Mw) of 30,000 to 70,000.

5. The surface treatment composition of claim 1, wherein the epoxy auxiliary resin (C) has an epoxide equivalent ratio of 450 to 550 g/eq and a weight average molecular weight (Mw) of 450 to 4,000.

6.  The surface treatment composition of claim 1, wherein the melamine-based curing agent comprises at least one functional group selected from the group consisting of methoxy methyl, hydroxymethyl and imino functional groups, and the functional group is a cross-linked skeletal polymer resin containing a carboxyl group.

7.  The surface treatment composition of claim 1, wherein the oxidation-discoloration inhibitor is at least one selected from the group consisting of ammonium molybdate and sodium molybdate.

8.  The surface treatment composition of claim 1, wherein the silane compound comprises at least one selected from the group consisting of vinylmethoxy silane, vinyltrimethoxy silane, vinylepoxy silane, vinyltriepoxy silane, methyltrimethoxysilane, tetraethylorthosilicate, tetramethylorthosilicate, 3-aminopropyltriepoxy silane, 3-glycidoxypropyltrimethoxy silane, 3-glycidoxypropyltriethoxy silane, 3-mercaptopropyltrimethoxy silane, N-(1,3 dimethylbutylidene)-3-(triepoxy silane)-1-propanamine, N,N-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-glycidoxypropylmethyldiethoxysilane, γ-mercaptopropyltriethoxysilane, and N-[2-(vinylbenzylamino)ethyl]-3-aminopropyltrimethoxysilane.

9.  The surface treatment composition of claim 1, wherein the silane compound is hydrolyzed by at least one acid selected from the group consisting of formic acid, acetic acid, phosphoric acid, hydrochloric acid, and nitric acid.

10. The surface treatment composition of claim 1, wherein the rust-inhibiting and corrosion-resistant agent is at least one selected from the group consisting of a phosphoric acid-based rust inhibitor, a fluorine-based rust inhibitor, a vanadium-based rust inhibitor, a cerium salt-based rust inhibitor, and a selenium salt-based rust inhibitor.

11. The surface treatment composition of claim 1, wherein the fingerprint-resistance improving agent is at least one selected from the group consisting of paraffin wax, olefin wax, carnauba wax, polyester wax, polypropylene wax, polyethylene-Teflon wax, and polyTeflon wax.

12. The surface treatment composition of claim 1, wherein a solid content is 20 to 40 wt% based on a total weight of the surface treatment composition, and a balance is a solvent.

13. The surface treatment composition of claim 12, wherein the solvent comprises 20 to 40 wt% of N-ethyl-2-pyrrolidone (NEP) based on the total weight of the solvent and a balance is water.

14. A surface-treated hot-dip zinc alloy plated steel sheet, comprising:

    a steel sheet;
    a ternary hot-dip zinc alloy plating layer formed on at least one surface of the steel sheet; and
    a surface-treated coating layer formed on the ternary hot-dip zinc alloy plating layer,
    wherein the surface-treated coating layer is formed from a surface treatment composition according to any one of claims 1 to 13.

15. The surface-treated ternary hot-dip zinc alloy plated steel sheet of claim 14, wherein the ternary hot-dip zinc alloy plating layer comprises an Al-enriched layer formed on an interface, and
    an occupancy area ratio of the Al-enriched layer is 70% to 100%.

16. The surface-treated ternary hot-dip zinc alloy plated steel sheet of claim 14, wherein the ternary hot-dip zinc alloy plating layer comprises 0.2 to 15 wt% of Al, 0.5 to 3.5 wt% of Mg, and a balance of Zn and inevitable impurities.

17. The surface-treated ternary hot-dip zinc alloy plated steel sheet of claim 14, wherein the surface-treated coating layer has a thickness of 1 $\mu$m to 10 $\mu$m.

18. A method for manufacturing a surface-treated ternary hot-dip zinc alloy plated steel sheet, the method comprising:

    coating a surface treatment composition according to any one of claims 1 to 13 on a ternary hot-dip zinc alloy plated steel sheet having a ternary hot-dip zinc alloy plating layer formed thereon;
    forming a surface-treated coating layer by drying the surface treatment composition.

19. The method for manufacturing a surface-treated ternary hot-dip zinc alloy plated steel sheet of claim 18, wherein the surface treatment composition is coated at a thickness of 2.5 $\mu$m to 50 $\mu$m.

20. The method for manufacturing a surface-treated ternary hot-dip zinc alloy plated steel sheet of claim 18, wherein in the forming a surface-treated coating layer, the surface treatment composition is dried by increasing a temperature to 70 to 250°C.

## INTERNATIONAL SEARCH REPORT

| International application No. |
|---|
| **PCT/KR2023/018586** |

| A. | CLASSIFICATION OF SUBJECT MATTER |
|---|---|

**C09D 175/06**(2006.01)i; **C09D 7/61**(2018.01)i; **C09D 7/63**(2018.01)i; **C09D 7/65**(2018.01)i; **C09D 7/20**(2018.01)i; **C08L 63/00**(2006.01)i; **C08L 91/00**(2006.01)i; **C08L 75/06**(2006.01)i; **C08K 5/5415**(2006.01)i; **C08K 3/24**(2006.01)i

According to International Patent Classification (IPC) or to both national classification and IPC

| B. | FIELDS SEARCHED |
|---|---|

Minimum documentation searched (classification system followed by classification symbols)

C09D 175/06(2006.01); B32B 15/08(2006.01); C09D 123/00(2006.01); C09D 175/04(2006.01); C09D 7/40(2018.01); C09D 7/43(2018.01); C09D 7/63(2018.01); C23C 22/05(2006.01); C25D 5/10(2006.01); C25D 5/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 표면 처리 조성물(surface treatment compositio n), 삼원계 용융 아연 합금 도금 강판(ternary hot dip zinc galvanized steel sheet), 수지 혼합물(resin mixture), 멜라민계 경화제 (melamine-based curing agent), 실란 화합물(silane compound), 내지문성 향상제(anti-fingerprint improving agent)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0048699 A (POSCO) 20 April 2022 (2022-04-20)<br>See paragraphs [0013]-[0014], [0020]-[0033], [0047]-[0054] and [0101]-[0111]; claims 11-19; and table 1. | 1-20 |
| Y | KR 10-2014-0081574 A (POSCO et al.) 01 July 2014 (2014-07-01)<br>See paragraphs [0022]-[0025], [0038]-[0048] and [0121]; and table 8. | 1-20 |
| A | CN 114929819 A (POSCO) 19 August 2022 (2022-08-19)<br>See entire document. | 1-20 |
| A | JP 2014-070128 A (DIC CORP) 21 April 2014 (2014-04-21)<br>See entire document. | 1-20 |
| A | KR 10-2015-0063221 A (HYUNDAI STEEL COMPANY) 09 June 2015 (2015-06-09)<br>See entire document. | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 February 2024** | **28 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/018586**

| Patent document cited in search report | | | Publication date (day/month/year) | Patent family member(s) | | | Publication date (day/month/year) |
|---|---|---|---|---|---|---|---|
| KR | 10-2022-0048699 | A | 20 April 2022 | KR | 10-2407717 | B1 | 10 June 2022 |
| KR | 10-2014-0081574 | A | 01 July 2014 | KR | 10-1439675 | B1 | 24 September 2014 |
| CN | 114929819 | A | 19 August 2022 | CN | 114929819 | B | 23 June 2023 |
| | | | | EP | 4071219 | A1 | 12 October 2022 |
| | | | | KR | 10-2021-0070732 | A | 15 June 2021 |
| | | | | KR | 10-2307916 | B1 | 30 September 2021 |
| | | | | WO | 2021-112392 | A1 | 10 June 2021 |
| JP | 2014-070128 | A | 21 April 2014 | JP | 6036111 | B2 | 30 November 2016 |
| KR | 10-2015-0063221 | A | 09 June 2015 | KR | 10-1546158 | B1 | 21 August 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5328857 A
- JP SHO5171233 A
- JP 2002332574 A
- JP HEI7096699 A
- JP 2005146340 A